# EUROPEAN PATENT APPLICATION

(11) **EP 1 371 949 A1**
(43) Date of publication of application: **17.12.2003**
(21) Application number: 03013257.5
(22) Date of filing: 12.06.2003
(51) Int. Cl.: G01C 21/32, G08G 1/0969

(54) **Updating of map data in a navigation device**

(30) Priority: 12.06.2002 JP 2002171617
(71) Applicant: Pioneer Corporation, Meguro-ku, Tokyo (JP)
(72) Inventor: Hamaguchi, Yoshide, Yamada, Kawagoe-shi, Saitama (JP); Arakawa, Takeharu, Yamada, Kawagoe-shi, Saitama (JP)
(74) Representative: Kühn, Armin

(57) **Abstract**

A communication navigation system is provided with a communication center apparatus (3x) and a communication terminal apparatus (5x, 5y) (5x, 5y) for transmitting/receiving information via a communication network (1x). The communication center apparatus includes a database (302) for storing data to be updated to the latest version, and a center side controlling device (301) for transmitting data in response to an updating request. The communication terminal apparatus includes a saving device (503) for saving data and the corresponding time and date information indicating the saving time and date of the data, and a terminal side controlling device (501x, 501y) for transmitting the updating request for transmitting the data over a predetermined period starting from the saving time and date, and updating the data by means of data transmitted in response to the updating request.

## Description

### BACKGROUND OF THE INVENTION

### 1. Field of the Invention

The present invention relates to a communication system and method feasible by using a communication network, such as a communication navigation system and method for a movable body e.g., for an on-vehicle use, a communication terminal apparatus and a communication center apparatus constituting such a communication system, and a computer program for making a computer function as such a system or apparatus.

### 2. Description of the Related Art

In conventional navigation systems, for example, the necessity is a map information recording medium, which stores the latest and a great volume of map data, as well as a search processing for an optimal route on the basis of the sophisticated map data and a display processing thereof. In this case, a microprocessor unit (MPU) capable of a high speed processing is to be implemented, resulting in the increase of the processing and the system in scale.

In view of this, there have been suggested various types of communication navigation systems to provide an improved processing and system in scale. Such communication navigation systems allow the map data to be obtained and provided via bidirectional wireless communication between a communication navigation terminal apparatus mounted on a vehicle and a communication center apparatus on a communication network (e.g. "MAP INFORMATION DISTRIBUTION SYSTEM FOR MOVABLE BODY" disclosed by the Japanese Patent Application Laid-Open No, Hei. 7-262493 and "TRAVEL ROUTE GUIDING SYSTEM" disclosed by the Japanese Patent Application Laid-Open No. Hei. 10-96644).

In the communication center apparatus in such a kind of communication navigation system, in comparison with the case that the recording medium storing the latest version of the map data is equipped in each navigation terminal apparatus mounted on the movable body, the latest version of the map data can be provided promptly and economically as a result of, for example, updating the map data in only one communication center apparatus. Namely, in the communication navigation system, all or part of the map data or the like stored in a recording medium provided for the navigation terminal apparatus can be updated by downloading the latest version of map data into each navigation terminal apparatus from the communication center apparatus via the communication network. Thereby, the user can use the latest version of the map data.

However, in the above-mentioned communication navigation system for example, under the condition that the map data is updated regularly or irregularly at the communication center, it is difficult to know the updating status of the map data or the like in the communication center at each navigation terminal apparatus. Therefore, even if the map data or the like is not updated in the communication center, the navigation terminal apparatus may try an operation to update the map data. This updating operation causes a technical problem involving a wasteful communication or a wasteful rewriting against the recording media. Particularly, the wasteful communication may increase the communication cost except for the case of always-connected type. Even if a version information is added to the map data for a so-called "version check", it involves the wasteful communication due to the version check, ending in the increase of the communication cost.

More generally, there are more or less similar problems such as the wasteful communication, the increase of the communication cost and the like, not only in the field of map data set forth above, but also in the field of the communication system for downloading the data to be updated to the latest version regularly or irregularly.

### SUMMARY OF THE INVENTION

The present invention has been accomplished in view of the above-mentioned problem for example. It is therefore an object of the present invention to provide a communication system and method capable of reducing the wasteful communication and contributing the decrease of the communication cost as for a downloading operation of the data to be versionupdated for example, a communication terminal apparatus and a communication center apparatus both for providing such a system, and a computer program for making a computer function as such a system or apparatus

The above object of the present invention can be achieved by a first communication system having a communication center apparatus and a communication terminal apparatus both for bidirectionaly transmitting/receiving information via a communication network. The communication center apparatus is provided with: a database for storing data, the data being used for a certain kind of application processing and being at least partially updated regularly or irregularly; and a center side controlling device for transmitting data, which is identified as an object of updating by an updating request, among the stored data via the communication network in response to the updating request. The communication terminal apparatus is provided with: a saving device for saving the data, which is transmitted from the center side controlling device, and saving time and date information, which indicates a saving time and date when the data is saved, in correlation with the saved data therein; a processing device for executing the application processing, on the basis of the data saved in the saving device; and a terminal side controlling device for (i) judging, on the basis of the time and date information, whether or not at least a part of the data saved in the saving device has expired over a predetermined period starting from the saving time and date, (ii) transmitting the updating request, which identifies the data judged as expired over the predetermined period as the object of updating and instructs to transmit the identified data, to the center side controlling device via the communication network, and (iii) updating the data saved in the saving device by means of the data transmitted from the center side controlling device in response to the updating request.

The above object of the present invention can be achieved by a second communication system having a communication center apparatus and a communication terminal apparatus both for bidirectionaly transmitting/receiving information via a communication network. The communication center apparatus is provided with: a database for storing data, the data being used for a certain kind of application processing and to be at least partially updated regularly or irregularly; and a center side controlling device for transmitting data, which is identified as an object of updating by an updating request, among the stored data via the communication network in response to the updating request. The communication terminal apparatus is provided with; a saving device for saving the data, which is transmitted from the center side controlling device, and saving time and date information, which indicates a saving time and date when the data is saved, in correlation with the saved data therein; a processing device for executing the application processing, on the basis of the data saved in the saving device; and a terminal side controlling device including (i) a first judgment device for judging whether or not data requested to be read is saved in the saving device, upon a reading request from the processing device to the saving device for reading the data necessary for executing the application processing, (ii) a second judgment device for judging whether or not the data requested to be read has expired over a predetermined period starting from the updating request time and date, in comparison with the time and date information relating to the data requested to be read, if the second judgment device judges that the data is saved, and (iii) an updating controlling device for transmitting the updating request, which identifies the data requested to be read as the object of updating and instructs to transmit the identified data, to the center side controlling device via the communication network, if the second judgment device judges that the data has expired over the predetermined period; and updating the data saved in the saving device by means of the data transmitted from the center side controlling device in response to the updating request. If the first judgment device judges that the data is not saved, (a) the updating controlling device transmits an acquisition request, which instructs to transmit the data judged as not saved in the saving device, to the center side controlling device via the communication network, (b) the processing device executes the application processing by means of the data transmitted from the center side controlling device in response to the acquisition request, and (c) the saving device saves the data, which is transmitted in response to the acquisition request, and saves time and date information, which indicates an acquisition time and date when the acquisition request is transmitted, in correlation with the saved data therein.

The above object of the present invention can be achieved by a third communication system having a communication center apparatus and a communication terminal apparatus both for bidirectionaly transmitting/receiving information via a communication network. The communication center apparatus is provided with: a database for storing data, the data being used for a certain kind of application processing and to be at least partially updated regularly or irregularly; and a center side controlling device for transmitting data, which is identified as an object of updating by an updating request, among the stored data via the communication network in response to the updating request. The communication terminal apparatus is provided with: a saving device for saving the data transmitted from the center side controlling device; a processing device for executing the application processing, on the basis of the data saved in the saving device; and a terminal side controlling device for (i) transmitting the updating request, which identifies the data to be used by the processing device as the object of updating and instructs to transmit the identified data, to the center side controlling device via the communication network and (ii) updating the data saved in the saving device by means of the data transmitted from the center side controlling device in response to the updating request. The data includes version information indicating a version thereof, and the center side controlling device judges whether or not a data block in a predetermined unit including the data as the object of updating is in the latest version in the database with referring to the version information, and transmits the data block in response to the updating request if the data block is not in the latest version, or transmits information indicating the unnecessity of updating in response to the updating request if the data block is in the latest version.

The above object of the present invention can be achieved by a computer program in a computer-readable medium for tangibly embodying a program of instructions executable by a computer to make the computer function as at least one of the communication center apparatus and the communication terminal apparatus of any one of the above described first to third communication systems of the present invention.

The above object of the present invention can be achieved by the communication terminal apparatus of any one of the above described first to third communication systems of the present invention.

The above object of the present invention can be achieved by a communication center apparatus of any one of the above described first to third communication systems of the present invention. The above object of the present invention can be achieved by a communication method executed by a communication system having a communication center apparatus and a communication terminal apparatus both for bidirectionaly transmitting/receiving information via a communication network. The method is provided, at the communication center apparatus, with: a storing process of storing data, the data being used for a certain kind of application processing and being at least partially updated regularly or irregularly; and a center side controlling process of transmitting data, which is identified as an object of updating by an updating request, among the stored data via the communication network in response to the updating request. The method is further provided, at the communication terminal apparatus, with: a saving process of saving the data, which is transmitted from the center side controlling, and saving time and date information, which indicates a saving time and date when the data is saved, in correlation with the saved data therein; an executing process of executing the application processing, on the basis of the data saved in the saving device; and a terminal side controlling process of (i) judging, on the basis of the time and date information, whether or not at least a part of the data saved in the saving device has expired over a predetermined period starting from the saving time and date, (ii) transmitting the updating request, which identifies the data judged as expired over the predetermined period as the object of updating and instructs the identified data. to the center side controlling device via the communication network, and (iii) updating the data in the saving device by means of the data transmitted from the center side controlling device in response to the updating request.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1 is a block diagram illustrating the first embodiment of the present invention.
FIG. 2 is a block diagram illustrating the second embodiment of the present invention.
FIG. 3 is a schematic illustration showing the entire configuration of the communication navigation system according to an Example of the present invention.
FIG. 4 is a block diagram illustrating an exemplary internal construction of the communication navigation terminal in FIG. 3 according to the Example.
FIG. 5 is a block diagram illustrating an exemplary internal construction of the communication center apparatus in FIG. 3 according to the Example.
FIG. 6 is a flow chart showing the process flow of the update scheduling for the map data in the communication center apparatus according to the Example.
FIG. 7 is a conceptual illustration showing the change in contents of an updating schedule table used in the Example, while the data is used.
FIG. 8 is a flow chart showing the process flow of the actual updating for the map data in the communication navigation terminal according to the Example.
FIG. 9 is a conceptual illustration showing the change in contents of an updating schedule table used in the Example, while the data is updated.
FIG. 10 is a conceptual illustration concretely showing an exemplary data unit to be updated in the Example.

### DETAILED DESCRIPTION OF THE PREFERRED EMBODIMENTS

The preferred embodiment of the present invention will now be discussed, referring to drawings.

### (First Embodiment)

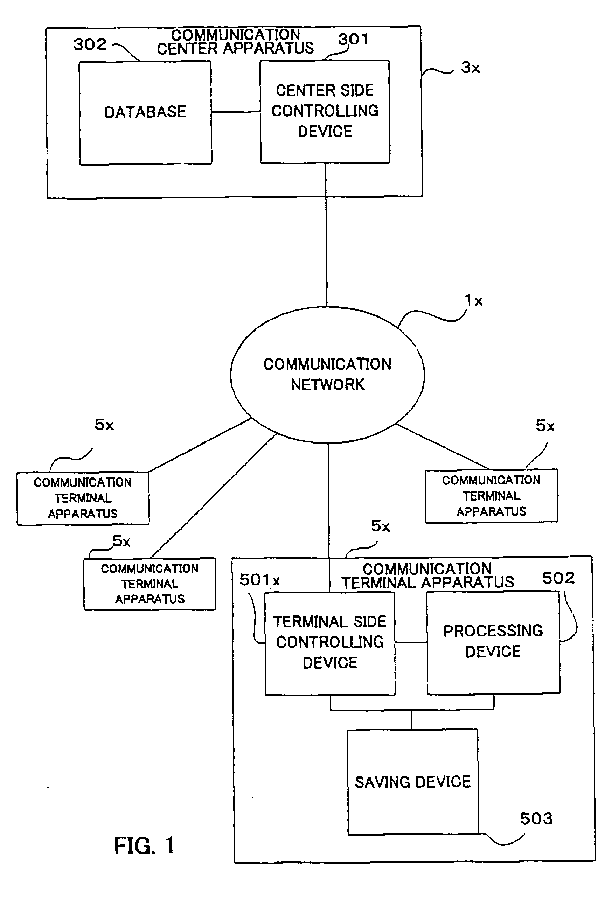

The first embodiment of the present invention will now be discussed, with referring to FIG. 1.

At first, the entire configuration of a communication system according to the first embodiment will be discussed, with referring to FIG. 1. FIG. 1 is a block diagram illustrating the communication system.

As shown in FIG. 1, the communication system according to the first embodiment is provided with a communication center apparatus 3x and a communication terminal apparatus 5x, for a bidirectional communication to transfer information via a communication network 1x.

The communication center 3x includes a center side controlling device 301, such as a computer, and a database 302.

The database 302 is provided with a memory whose capacity is relatively large. The database 302 is used for executing a certain kind of application processing such as the navigation processing and for storing various data, which is at least partially updated regularly or irregularly. In the invention, the "data" which is stored or to be stored in the database 302 and is saved or to be saved in a saving device 503 includes any type of data insofar as the data is used for a certain kind of application and has a possibility to be updated or version-upgraded to a new version; any of which can have the special effect as discussed below in an extent depending on the use environment of the communication system. Such data includes map data, telephone book data, client data, timetable data, postal code data and so on.

The center side controlling device 301 extracts the data identified as the object of updatingby the updating request performed via the communication network 1x tom the communication terminal apparatus 5x, among the data stored in the database 302. Further, the center side controlling device 301 is designed for transmitting the extracted data via the communication network 1x. The communication network 1x according to the present invention includes a wireless transmission in whole or in part and may include a wired transmission in whole or in part.

The communication terminal apparatus 5x includes a terminal side controlling device 501x, a processing device 502 and a saving device 503, which may comprise a computer.

The saving device 503 may be provided with a memory whose capacity is relatively little, for saving the data transmitted from the center side controlling device 301 and saving the time and date information for indicating the saving time and date of the saved data in correlation with the saved data. The "time and date information" according to the present invention basically means the information that indicates "time and date", for example, "AA:BB, on DD MM, YYYY (wherein AA shows hours, BB shows minuets, DD shows date, MM shows month and YYYY shows year)". Additionally, the "time and date information" may be the information indicating only date, or the information indicating only week, month or year otherwise only time. Namely, the "time and date information" according to the present invention is a general concept representing any given information relating to the time and/or date depending on the usage environment of the communication system.

Additionally, the saving device 503 may save the data transmitted in response to the acquisition request for acquiring new data to be newly used in the communication terminal apparatus 5x, as discussed below, in addition to the data transmitted in response to the updating request. Further, in addition to the data transmitted in response to the updating request or the acquisition request, the saving device 503 may save the data initially transmitted collectively by default, or may save the data, without the mediation of the communication network 1x, which is read from other recording media such as DVDs, CDs and so forth.

The processing device 502 is designed to execute a certain kind of application processing such as the navigation processing on the basis of the data saved in the saving device 503.

The terminal side controlling device 501x judges whether or not at least a part of the data saved in the saving device 503, such as the data for the actual processing by the processing device 502, has expired over the predetermined period, on the basis of the time and date information. Relating to this, the terminal side controlling device 501x identifies the data that has already expired as the object of updating and then transmits the updating request for transmitting the data relating to the object of updating to the center side controlling device 301 via the communication network 1x. Finally, the terminal side controlling device 501x is designed to update the data identified as the object of updating in the saving device 503 by means of the data transmitted from the center side controlling device 301 in response to the updating request.

The operation of the first embodiment constructed as set forth above will now be discussed.

Firstly, when the processing device 502 processes the data saved in the saving device 503, i.e. when the processing device 502 executes the application processing in the communication terminal apparatus 5x, the terminal side controlling device 501x judges whether or not the data saved in the saving device 503 has expired over the predetermined period, one the basis of the time and date information.

Successively, once the data is judged as already expired, the terminal side controlling device 501x transmits the updating request, which instructs to transmit individually or collectively the data relating to the data already expired and thereby identified as the object of updating, to the center side controlling device 301 via the communication network 1x, on the occasion of a trigger event or after the expiration of a variable or non-variable period. Herein, the "trigger event" means a certain operation that is specified for the communication terminal apparatus 5x in advance, such as an operation of turning on the main power to the communication terminal apparatus 5x.

Once received the updating request via the communication network 1x, the center side controlling device 301 extracts the data identified as the object of updating by the updating request, from among the data stored in the database 302. The extracted data is then transmitted via the communication network 1x,

Once received the data corresponding to the updating request via the communication network 1x, the terminal side controlling device 501x updates the data saved in the saving device 503, by means of the received data.

Before or after this updating request or updating operation, the processing device 502 executes a certain kind of application processing, such as a navigation processing, by means of the data saved in the saving device 503 and/or the data received via the communication network 1x. More concretely, if the updating request is transmitted collectively afterward, the processing device 502 executes the application processing by means of the data that has been already saved in the saving device 503 and not yet updated, without 5 waiting for the updating request. On the other hand, if the updating request is transmitted immediately after the judgment, the processing device 502 executes the application processing, by means of the data saved in the saving device 503, which has never been updated yet or has been already updated, otherwise by means of the data directly received via the communication network 1x, without waiting for the updating request or after waiting for the result of the updating request. Otherwise, the processing device 502 executes the application processing by means of the data that has never been updated yet, after ensuring no need for the updating operation.

Thus, according to the first embodiment, the updating request for the data just updated is advantageously avoided, resulting in the reduction of the wasteful use of the communication network 1x or the wasteful version check in the communication center apparatus 3x. Thereby the communication cost can be reduced.

Particularly, the updating request is preferably transmitted collectively for the data as the object of updating on the occasion of the trigger event as mentioned above, rather than transmitted simultaneously with the judgment of the time expiration. Thus, the wasteful use of the communication network 1x can be even more reduced, by updating the data as the object of updating collectively for the fixed or variable period. Thereby, the communication cost can be even more reduced.

It is noted that, however, the adequate merit and effect will be obtained, even in the case that the updating request is transmitted immediately after the judgment of the time expiration.

### (Various Aspects of First Embodiment)

As one aspect of the first embodiment, the terminal side controlling device 501x may be designed to judge whether or not the data to be actually used by the processing device 502 has expired over the predetermined period, among the data saved in the saving device 503. More concretely, for example, the terminal side controlling device 501x may be designed to judge the time expiration of only the data to be used for an application processing, on the occasion when the processing device 502 executes the application processing. That is, if the data not necessary for the application processing by the processing device 502 is of an old version, there is no inconvenience insofar as the old versioned data is not used. Thereby, the wasteful use of the communication network 1x can be still more reduced, by the fact that the data not necessary for the application processing is not updated, or not checked its version.

As another aspect in the first embodiment, the time and date information may consist of the updating request time and date when the updating request is transmitted by the terminal side controlling device 501x, instead of the saving time and date. Therefore, the terminal side controlling device 501x may be designed to identify the data already expired over the predetermined period, by comparison with the updating request time and date instead of the saving time and date, as the object of updating. That is, since the updating request time and date and the saving time and date is almost equal except for the time lag due to the data transmission via the communication network 1x, the updating request time and date can employed without distinct problems. On the other hand, if the version check is executed for the data stored in the database 302 in the communication center 3x, the time expiration is judged by comparison with the version check time and date when the version check is executed finally, instead of the saving time and date when the data is actually updated and saved. Thereby, in terms of the reduction in the use of the communication network 1x, this aspect is still further effective.

As still another aspect in the first embodiment, the terminal controlling device 501x may be designed to judge whether or not the data necessary for the application processing is saved in the saving device 503 precedent to the application processing, and transmit the acquisition request, which instructs to transmit the data judged as not saved in the saving device 503, to the center side controlling device 301 via the communication network 1x. Further, by means of the data transmitted from the center side controlling device 301 in response to the acquisition request, the processing device 502 may execute the application processing and the saving device 503 may save the data transmitted in response to the acquisition request and further save the time and date information indicating the saving time and date or the updating time and date, in correlation with the saved data.

Thus, according to the first embodiment, each of a storing process and a center side controlling process according to the communication method of the present invention is executed by the center side controlling device 301 and the database 302 in the communication center apparatus 3x, respectively. On the other hand, each of a savingprocess, a processing process and a terminal side controlling process is executed by the terminal side controlling device 501x, the processing device 502 and the saving device 503 in the communication terminal apparatus 5x, respectively.

### (Second Embodiment)

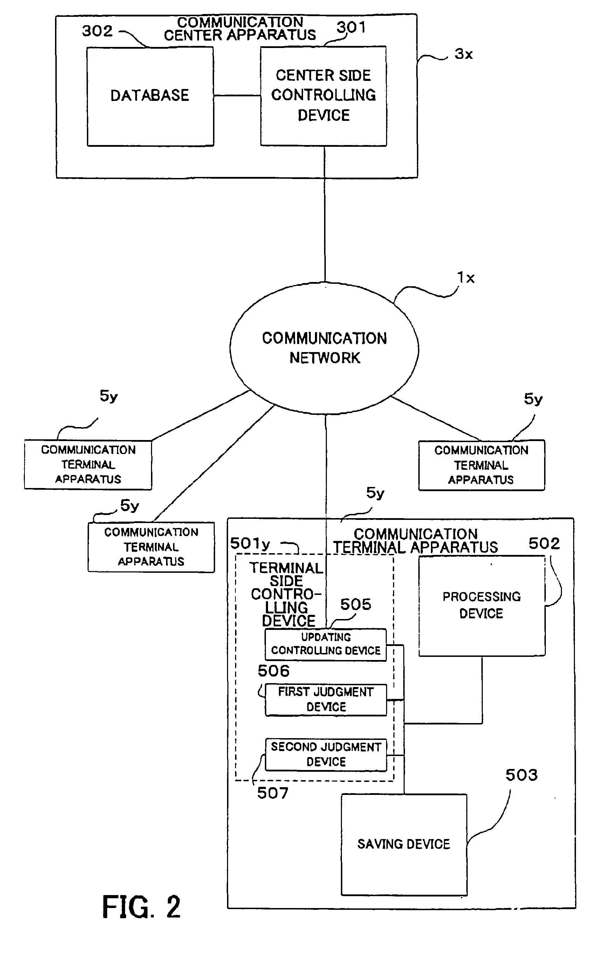

The second embodiment of the present invention will now be discussed, referring to FIG. 2.

A communication system according to the second embodiment includes a communication center apparatus 3x same as that according to the first embodiment as shown in FIG. 1 and a communication terminal apparatus 5y different from the first embodiment in the following point relating to the function. In FIG. 2, similar numbers are utilized in designating similar components to that of the FIG. 1, whose description will be omitted as appropriate.

Namely, according to the second embodiment, as shown in FIG. 2, the communication terminal apparatus 5y is provided with a terminal side controlling device 501y including an updating controlling device 505, a first judgment device 506 and a second judgment device 507.

The first judgment device 506 is for judging whether or not the data necessary for the application processing is saved in the saving device 503, if the reading request for reading this data is requested to the saving device 503. The second judgment device 507 is for judging whether or not this data has expired over the predetermined period by comparison of the time and date information relating to this data with the updating request time and date, if it is judged by the first judgment device that this data is saved in the saving device 503. The updating controlling device 505 is designed to make the terminal side controlling device 501y request the acquisition request, which instructs to transmit this data necessary for the application processing, to the center side controlling device 301 via the communication network 1x if the first judgment device 506 has judged that this data necessary for the application processing is not saved in the saving device 503.

It is noted that, in the second embodiment, the saving device 503 provided for the communication terminal apparatus 5y may save the time and date information, which indicates the updating request time and date, in correlation with the saved data. The time and date information may also be one indicating the saving time and date.

The other components and construction thereof are the same as in the case of the first embodiment.

The operation of the second embodiment constructed as above will now be discussed.

Firstly, for example, when the processing device 502 is to execute the application processing by means of the data saved in the saving device 503 of the communication terminal apparatus 5y, the first judgment device 506 judges whether or not the data is saved in the saving device 503.

If the first judgment device 506 judges that the data is not saved in the saving device 503, the terminal side controlling device 501y transmits to the center side controlling device 301 the acquisition request for transmitting this data. In this case, once received such an acquisition request via the communication network 1x, the center side controlling device 301 operates in the similar manner to the first embodiment set forth above. On the other hand, once received the data corresponding to the operation of the center side controlling device 301, the terminal side controlling device 501y operates in the similar manner to the terminal side controlling device 501x relating to the first embodiment set forth above.

On the other hand, if the first judgment device 506 judges that the data necessary for the application processing is saved in the saving device 503, the second judgment device 507 judges whether or not this data has expired over the predetermined period by comparison of the time and date information relating to this data with the updating time and date.

If the second judgment device 507 judges that the data has expired over the predetermined period, the updating controlling device 505 transmits to the center side controlling device 301 via the communication network 1x the updating request for transmitting individually or collectively the data relating to the data identified as the object of updating, to the center side controlling device 301 at a certain trigger event, or after a fixed or variable period. In contrast, if it is judged that the data has never expired over the predetermined period, the updating request is not transmitted.

Before or after the updating request or updating operation, the processing device 502 executes a certain kind of application processing such as a navigation processing, by means of the data saved in the saving device 503 and/or the data received via the communication network 1x.

As described above, according to the second embodiment, the updating request for the data just updated is advantageously avoided, resulting in the reduction of the wasteful use of the communication network 1x or the wasteful version check in the communication center apparatus 3x.

Particularly, when the processing device 502 needs the data, the updating controlling device 505 updates the data on the basis of the result of the judgment by the second judgment device 507. Therefore, the use of the communication network 1x can be reduced, by the fact that the data not necessary for the processing device 502 is not updated or version-checked.

### (Various Aspect in First or Second Embodiment)

As another aspect in the first or second embodiment, the data includes version information indicating the version thereof, and the center side controlling device 301 judges whether or not the data relating to the updating request is of the latest version in the database 302 on the basis of the version information of this data. The center side controlling device 301 may be designed to transmit the data in response to the updating request if the data is not of the latest version, and to transmit the information indicating the absence of the necessity for updating if of the latest version. That is, the so-called "version check" may be executed in the communication center apparatus 3x. In this arrangement, since the absence of the necessity for updating is found by the version check, the vain processing of updating the latest version of the data already saved in the saving device 503 can be interrupted at this point.

Further in this arrangement, the center side controlling device 301 may be designed to judge whether or not the data relating to the updating request is of the latest version by unit of a data block in a predetermined range including the data relating to the updating request. Thus, the object to be updated to the latest version is divided into multiple data blocks of a convenient size and thereby the necessity of the version-upgrade can be reduced in terms of frequency, and further the total volume of data to be transmitted can be advantageously reduced, if there is the necessity for updating to the latest version.

In another aspect of the first or second embodiment, the terminal side controlling device 501x and 501y may be designed to save an updating schedule information for identifying the data as the object of updating in correlation with the data as the object of updating in the saving device 503, and to transmit the updating request on the basis of the updating schedule information with a certain timing thereafter.

Still further in such an arrangement employing the updating schedule information, the terminal side controlling device 501x or 501y may be designed to judge whether or not the data already found expired over the predetermined period is already identified as the object of updating, on the basis of the updating schedule information, and to update the updating schedule information if the expired data is not identified as the object of updating. That is, if the expired data is scheduled to be updated after the latest trigger event, there is no need for the redundancy of the updating schedule and thus the expired data is scheduled to be updated only if not scheduled to be updated,.

The updating schedule information includes an updating schedule flag, for example, provided for each data. For instance, by constructing a table including an updating schedule flag and an identifier for identifying the data to be updated as an updating unit, it is possible to judge quickly which data saved in the saving device 503 is to be updated by means of the table at the trigger event, resulting in the updating request on the basis of the updating flag.

Alternatively, the terminal side controlling device 501x or 501y may be designed to save the data scheduled to be updated in the saving device 503 (e.g. in a certain address area or region) separately from the data not to be updated, and then transmit the updating request for the data scheduled to be updated with a certain timing thereafter, instead of using the updating schedule information such as the updating schedule flag.

In the above first or second embodiment, the "predetermined period" serving as the basis for the judgment whether or not the data is identified as the object of updating may be defined depending on the time cycle of the version-upgrade for the database. For example, if the database is scheduled to 5 be updated to the latest version once a month, then the predetermined period may be defined as in the order of one or two weeks, otherwise, if updated once a week, then the predetermined period may be defined as in the order of one or two days. Particularly, the predetermined period may be of variable by inquiring in real time such a time cycle of the version-upgrade for the database 302. Alternatively, the user may select the predetermined period optionally.

In still another aspect in the first or second embodiment, the center side controlling device 301 may be designed to transmit a data block in a predetermined unit including the data identified as the object of updating, in response to the updating request. Alternatively, the terminal side controlling device 501x or 501y may be designed to request the data block in the predetermined unit including the data identified as the object of updating, by the updating request.

In any case, dividing the unit for the version-upgrade into multiple data blocks of convenient size, the necessity of the version-upgrade in the frequency thereof can be reduced and the total volume of data to be transmitted can also be advantageously reduced. For example, if the data of interest is the map data and the updating the map data over the whole country is required, the total volume of data to be transmitted is enormous. Therefore, it is very advantageous to update only the data in the area of interest, in view of the reduction in the use of the communication.

The communication system according to the first or second embodiment discussed referring to FIG. 1 and FIG. 2 is novel not only as a whole, but also in the communication terminal apparatus 5x as one component as well as in the communication center apparatus 3x as one component, As shown in FIG. 1 and FIG. 2, connecting a plurality of the communication terminal apparatus 5x, 5y identical to each other with the common communication center 3x may produce the further profit of the communication system.

According to the computer program of the present invention in a computer-readable medium, a program of instructions executable by a computer to make the computer function as at least one of the communication center apparatus and the communication terminal apparatus in the above described communication system in the first or second embodiment. The computer-readable medium may be a recording medium such as a CD or DVD, or may be a carrier wave capable of carrying data signal embodied therein. Specifically, loading the computer program for making the computer function as the communication system from a recording medium such as CD, DVD into one computer, or downloading via the communication network 1x and then executing this program, the communication center apparatus 3x may be obtained. More specifically, this computer may serve as each component set forth above such as the database 302 and the center side controlling device 301. Loading this program from a recording medium such as a CD, DVD into other computers, or downloading via the communication network 1x and then executing this program, the communication terminal apparatus 5x or 5y may be obtained. More concretely, this computers may serve as each component set forth above such as the processing device 502 and the terminal side controlling device 501x or 501 y. For example, the communication terminal apparatus 5x or 5y may be provided with a browsing function, and the computer program of interest may be supplied generally or partly from the communication center apparatus 3x as appropriate.

The function or operation set forth above and other merits of the present invention will now be cleared in the description of the Example.

### (Example)

The Example of the communication system and method, and the computer program according to the present invention will now be discussed, with referring to drawings. In each Example set forth below, a communication navigation system is constructed as one example of the communication system of the present invention and a communication navigation terminal for on-vehicle use is constructed as one example of the communication terminal apparatus.

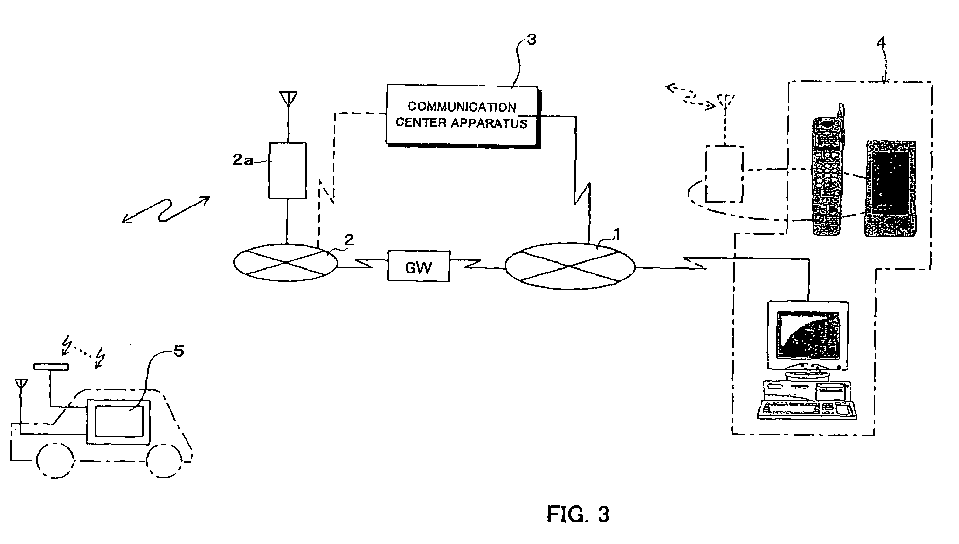

Now, the entire configuration of the communication navigation system will be discussed, with referring to FIG. 3. FIG. 3 is a block diagram illustrating the entire configuration of the communication navigation system of the Example.

In the Example, the "map data" transmitted for the navigation processing via a digital fixed communication network 1 includes not only the map data in the narrow sense such as a topographical map, a road map or an optimal route, but also the map data in the broad sense including various kinds of data for the navigation processing. The map data in the broad sense includes, for example, data for indicating information relating to various facilities such as amusement parks, convenience stores, service areas, hotels, restaurants, landmarks on the map (such as restaurant menu or open/close time, or hotel information), number information such as telephone numbers or postal codes relating to a point or an area on the map, and various information indicating an event information or touristic information relating to a point or an area on the map.

In the Example as shown in FIG. 3, there are provided the digital fixed network 1 and a digital movable network 2, both of which are connected to each other via gateway (GW) device for communication protocol conversion, and hereinafter both network may be collectively called a "communication network", as appropriate. In this communication network, an IP packet communication is performed under the environment of TCP/IP (Transmission Control Protocol/Internet Protocol), e.g. with Internet.

A communication center apparatus 3 for the communication navigation provider and a communication terminal 4 for the user are connected to the digital fixed communication network 1.

A cellular base station 2a on the digital movable network 2 accommodates via the radio region (e.g., the air interface), for example, a mobile phone or a personal digital assistant (PDA) as another example of the communication terminal 4, and accommodates further a communication navigation terminal 5 for on-vehicle use mounted on the user's car.

The communication navigation terminal 5 serves an example of the communication terminal 5x or 5y according to the embodiments set forth above. On the other hand, the communication terminal 4, such as a personal computer disposed in the user's house, serves another example of the communication terminal apparatus 5x or 5y according to the embodiments set forth above.

The communication center 3 is designed for saving and maintaining the latest map data including a great volume of route searching information or a map information for displaying with various scales, and is also designed for executing the burdensome optimal route searching, all of which are conventionally performed in the navigation apparatus for on-vehicle use.

The communication navigation terminal 5 is designed to transmit the updating request or acquisition request for the map data to the communication center 3, or transmit the search request for the optimal route, and indicate the designation for transmitting the map information etc. relating to the request. The indication for such a request or a designation for transmitting may be transmitted from the communication terminal 4, in a similar manner to the transmission from the communication navigation terminal 5.

The communication navigation terminal 5 is for on-vehicle use and for downloading the map information for displaying of minimum necessity for displaying the map from the map data in the communication center 3 at least in the map display operation of the navigation processing, and/or is provided with a recording medium such as a CD or a DVD for storing the map information for displaying. By means of the map information for displaying, the road map can be displayed on the screen, as well as, for example, the optimal route to the destination, the current location of the car, the traveling direction, the scale circle/radius, the traveled tracking or the map direction etc.

Provided for these communication center 3, communication terminal 4 and communication navigation terminal 5 is a communication application program (e.g. a web browser), which is discussed in detail below.

The network in FIG. 3 is not limited to the TCP/IP. Various kinds of data communication protocols are applicable. An analog fixed communication network may be employed instead of the digital fixed communication network 1.

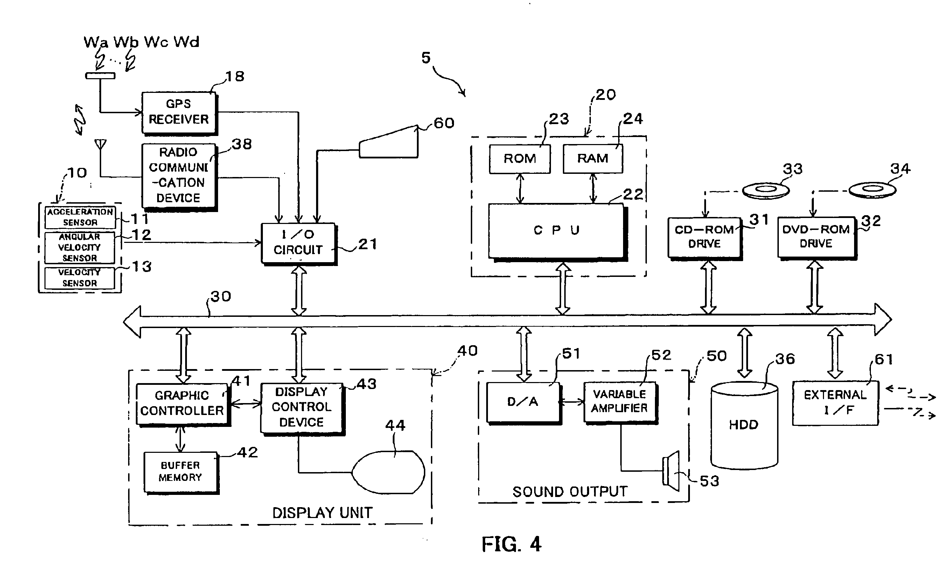

The communication navigation terminal 5 in FIG. 3 will be further discussed, with referring to FIG. 4. FIG. 4 is a block diagram illustrating the internal architecture of the communication terminal apparatus 5 shown in FIG. 3.

Referring to FIG. 4, the communication navigation terminal 5 is provided with a stand-alone measurement unit 10, a GPS receiver 18, a system controller 20, an input/output (I/O) circuit 21, a CD-ROM drive 31, a DVD-ROM drive 32, a hard disk drive (HDD) 36, a radio communication device 38, a display unit 40, a sound output 50, an input 60, and an external interface (I/F) 61, each of which is connected with a bus line 30 for transmitting the control data and the process data.

Particularly in this embodiment, the system controller 20 serves an example of the terminal side controlling device and the processing device, the HDD 36 serves an example of the saving device.

The stand-alone measurement unit 10 includes an acceleration sensor 11, an angular velocity sensor 12 and a velocity sensor 13. The acceleration sensor 11 is for example provided with a piezoelectric element for outputting the acceleration data obtained from the measurement of the acceleration of the vehicle. The angular velocity sensor 12 is for example provided with a vibrating gyroscope for outputting the angular velocity data and relative azimuth data obtained from the measurement of the angular velocity of the vehicle when the direction of the vehicle is changed. The velocity sensor 13 is for mechanically, magnetically, or optically detecting the rotation of a vehicle shaft and for outputting signals with pulse numbers corresponding to the vehicle speed, at every rotation by a predetermined angle of the vehicle shaft.

The GPS receiver 18 has a known construction provided with a memory, a microprocessor unit (MPU), a digital signal processor unit (DSP) or the like, as well as a high frequency reception processing device and a plane polarization non-directional receiving antenna. The GPS receiver 18 receives the electrical wave Wa to Wc (four electrical wave Wa to Wd for the further accurate measurement) from at least three GPS satellites placed into the orbit around the earth, to perform an inverse-diffusion of spectra, a distance measurement, a Doppler measurement, and an orbital data processing, and to continuously output absolute position information of a reception position (i.e., a driving position of a vehicle) from the I/O circuit 21 to the bus line 30 after the calculation of a moving velocity/azimuth and the calculation of a location. The absolute position information is taken into the system controller 20 and then displayed on the map screen.

The system controller 20 includes a CPU 22, a ROM 23 that is a non-volatile solid state memory, and a working RAM 24, for transmitting and receiving data with each component connected to the bus line 30. A control program and a boot program stored in the ROM 23 can execute the control on the data transmitting. Particularly, the RAM 24 is for temporarily storing the setup information for changing the map display (changing to the whole or partially map display) by the user operation via the input 60.

The CD-ROM drive 31 and the DVD-ROM drive 32 respectively read and output the map data (e.g. various kinds of road data such as the road width or the number of lanes on the map information (map folio) stored respectively in a CD-ROM 33 and a DVD-ROM 34).

Either the CD-ROM drive 31 or the DVD-ROM drive 32 may be employed. Alternatively only one drive compatible between CD-ROM and DVD-ROM may be employed,

The hard disk drive 36 is operative to store the map data (image data) that is read at the CD-ROM drive 31 or the DVD-ROM drive 32 and then to read it at any time. The hard disk drive 36 may also store audio data and/or video data that is read at the CD-ROM drive 31 or the DVD-ROM drive 32. Thereby, for example, an audio and/or video output can be obtained by reading the audio and/or video data stored in the hard disk drive 36, while the navigation processing is executed by reading the map data stored in the CD-ROM 33 or the DVD-ROM 34. Alternatively, the navigation processing can be executed by reading the map data stored in the hard disk drive 36, while the audio and/or video output may be executed by reading the audio or video data stored in the hard disk drive 36. Furthermore, the map data or the audio/video data may be downloaded via the radio communication device 38 into the hard disk drive 36 and may be then read at desired time point for the data output.

Particularly in the Example, various kinds of data necessary for the navigation processing (e.g. various kinds of road data such as road width or the number of lanes on the map information in the map folio) can be outputted by reading the data downloaded from the communication center apparatus 3 and stored into the hard disk drive 36, even if all or part of the data stored in the CD-ROM 33 or the DVD-ROM 34 is not used. Furthermore, it is judged whether or not the map data stored in the hard disk drive 36 has expired over the predetermined period starting from the latest saving time and date or from the latest updating request time and date. If it is judged that the data has expired over the predetermined period, the data is identified as the data to be updated. On the occasion of the trigger event afterward, the updating request for this data will be transmitted.

The radio communication device 38 is constructed similarly to a general mobile phone. For example, TDMA such as PDC (Personal Digital Cellular Telecommunication System) or PHS (Personal Handyphone System), TDD or CDMA (an RF radio transmitter-receiver, an encoder/decoder, a time division multiplexer, a controller, an audio input/output etc.), any of which is known in the art, can be employed.

The display unit 40 is operative to display various kinds of processing data on the screen under the control of the system controller 20. In the display unit 40, a graphic controller 41 controls each component in the display unit 40, on the basis of the control data transmitted from the CPU 22 via the bus line 30. A buffer memory 42 employing V-RAM or the like is operative to store temporarily the instantaneously displayable video information. Furthermore, the display controller 43 controls the display operation, and the display 44, which can be an LCD (Liquid Crystal Display), an EL (Electro-Luminescence) or a CRT (Braun tube), is operative to display the video data output from the graphic controller. This display 44 may be disposed near the front panel within the vehicle.

In the audio output unit 50, a D/A converter 51 is operative to convert sound information transmitted via the bus line 30 under the control of the system controller 20 into an analog signal, and the audio analog signal output from the D/A converter 51 is subjected to a variable-amplifier (AMP) 52 for variable-amplification to be outputted to a speaker 53, where sound is outputted.

The input device 60 can be provided with keys, switches, buttons, remote controllers and audio input devices, for inputting various commands or data. The input device 60 may be disposed around the display 44 or the front panel on the body of the on-vehicle type electronic system of the invention in a mounted state on the vehicle.

The communication navigation terminal 5 is not limited to the construction set forth above. For example, the GPS receiver 18 may be designed, instead of being built into the communication terminal 5 and connected via wiring with the I/O circuit 21, in such a manner that a conventional mobile GPS receiver is connected via wiring with the external I/F 61 (Le. interfaced connection). Alternatively, the GPS receiver 18 may employ a radio access system in that each of a conventional mobile GPS receiver and the external I/F 61 is provided with a weak radio wave transmitter-receiver (e.g. Bluetooth frequency hopping communication system).

Similarly to the GPS receiver 18, the radio communication device 38 may be designed in such a manner that a conventional mobile phone is connected with the external I/F 61 via wiring (i.e. interfaced connection) or may employ a radio access system in that each of a conventional mobile phone and the external I/F 61 is provided with a weak radio wave transmitter-receiver.

Furthermore, the input device 60 may employ a weak radio transmitreceive system, similar to that in the GPS receiver 18 or the radio communication device 38, as well as an infrared remote system. In the case of employing the infrared remote system, an infrared receiver or decoder is built into the communication terminal 5 (generally, disposed around the display 44), and a remote controller is provided for the infrared remote control of the user.

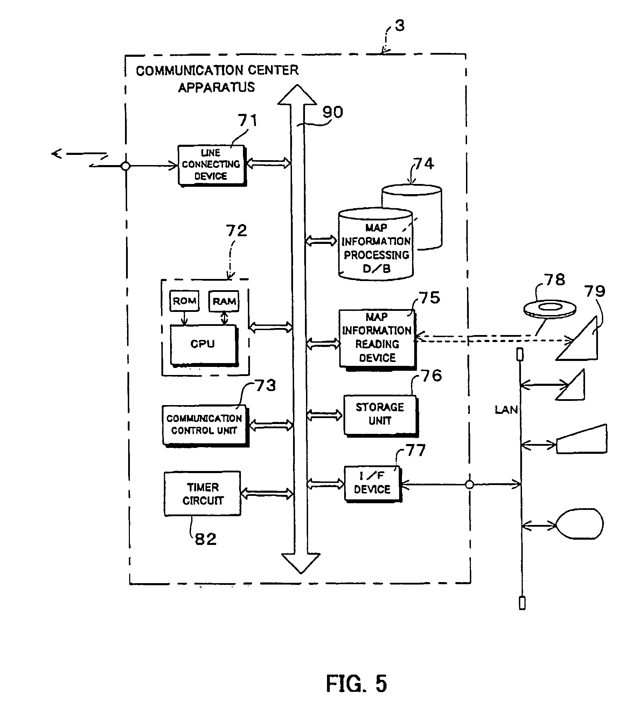

Now the communication center apparatus 3 shown in FIG. 3 will be further discussed, with referring to FIG. 5. FIG. 5 is a block diagram illustrating an exemplary internal construction of the communication center apparatus 3.

In FIG. 5, the communication center apparatus 3 is provided with a line connecting device 71, a microprocessor 72, a communication control unit 73, a map information processing database device 74, a map information reading device 75, a storage unit 76, an interface (I/F) 77, a DVD-ROM 78 (or CD-ROM), a communication terminal 79, a timer circuit 82 and a bus line 90.

Particularly in the Example, the map information processing database device 74 serves as one example of the database, while the microprocessor 72 and the communication control unit 73 serve together as one example of the center side controlling device.

The line connecting device 71 is for accommodating the communication center 3 into the digital fixed communication network 1 and includes, for example, a DSU (Digital Service Unit), a router, a firewall and so on. If the analog fixed communication network is employed instead of the digital fixed communication network 1 in FIG. 1, the line connecting device 71 is provided with a network control unit (NCU), an encoding/decoding device (modem) and so on.

The microprocessor 72 is provided with a ROM, a working RAM and a CPU. The communication center apparatus 3 controls each part according to the program. The control data and the process data are transmitted via the bus line 30. The microprocessor 72 further executes, in association with the map information processing database device 74, various data processings such as optimal route searching, as discussed below.

The communication control unit 73 executes, in association with the line connecting device 71, a communication protocol for the communication with the network. For example, TCP/IP is executed as the communication protocol.

The map information processing database device 74 is operative to store the map data including the map information for displaying with various scales, or the route searching information such as a great volume of link information, node information or the like covering a road network disposed in a wide region all over Japan or Honshu (the biggest island in Japan). The map information processing database device 74 further executes, in association with the microprocessor 72, a data processing such as optimal route search processing by means of this map data.

The map information reading device 75 is operative as a drive for reading the map data from the CD-ROM or DVD-ROM 78. This map data from the CD-ROM or DVD-ROM 78 is transmitted via the bus line 90 to the map information processing database device 74 and is stored therein. The updating of the map data at the map information processing database device 74 is executed by reading the data from the CD-ROM or DVD-ROM 78 storing the latest map data.

The storage unit 76 is for storing the setup information of the apparatus and parameters transmitted via the bus line 90, for the control process of the microprocessor 72.

The I/F 77 includes therein an external LAN (Local Area Network) for executing various information processings or the maintenance, such as the replacing of the map data at the map information reading device 75.

The communication terminal 79 is for capturing the map data without the use of the CD-ROM or DVD-ROM 78. For example, it is for downloading (receiving) the map data online-supplied by the map information supplier and installing it into the map information processing database device 74. Therefore, the updating of the map data at the map information database device 74 may be executed via the communication terminal 79.

In the case that the communication center apparatus 3 is employed as an Internet, a conventional portal site may be employed. For example, the device may be provided with a web server, a FTP (File Transfer Protocol) file transfer server, a DNS (Domain Name System) server, a FAX/E-mail server and so on.

The mobile phone shown in FIG. 3 as the communication terminal 4 may be the known type such as PDC or PHS (TDMA, TDD or CDMA). The PDA or a compact general-purpose computer, as the communication terminal 4, is also well known in the operation thereof, each of which is not discussed in detail. The mobile phone as the communication terminal 4 may be provided with an application (a specific designed browser) for browsing the contents discussed in a specially designed HTML (Hypertext markup language) format accessible via Internet, as known in the art. On the other hand, the PDA or a compact general-purpose computer may be provided with an application (a browser/mailer application program) accessible via Internet, as known in the art.

Particularly in the Example as discussed referring to FIG. 3 to FIG. 5, the communication center apparatus 3 is operative to execute the route searching, which has been conventionally executed within the on-vehicle navigation apparatus, by means of the microprocessor 72 and the map information processing database device 74 and so forth, and to supply to the communication navigation terminal 5 the route information indicating the optimal route obtained as the result of the route searching.

The communication terminal 4 is designed not only to request to the communication center apparatus 3 for the route searching, but also to indicate the destination to which the information for the route searching will be transmitted. Such a route searching request or a location indication may be transmitted from the communication navigation terminal 5 in a similar manner to the transmission from the communication terminal 4.

The communication navigation terminal 5 is operative to display the route on the road map by means of the route information transmitted via radio wave from the communication center apparatus 3, Furthermore, the communication navigation terminal 5 is also operative to perform the route guidance, such as the direction to turn right or left or go straight, at each guidance point by means of the route guidance information for each guidance point on the route, which is transmitted together with the route information. However, the route guidance information is not necessarily transmitted via the radio wave together with the route information, may be produced at the communication navigation terminal 5 on the basis of such received route information.

Particularly in the present Example, the map information processing database device 74 in the communication center apparatus 3 is operative to store a greater volume of map data including more various information in comparison to the map data stored or to be stored in the CD-ROM 83, the DVD-ROM 34, the HDD 36 or the like in the communication navigation terminal 5. That is, such map data may be the information for the route searching including node information covering the road network disposed in a wide region such as all over Japan or Honshu (the biggest island in Japan), or the link information, or the map information for displaying with various scales. Also, the map data may include additional data, for instance, a road or roads on each map, scenery such as railways/waters, names of road/map (letters) and facilities marking, guide information of tourism/facilities, and map scales, Particularly, the route searching information is for the route searching on the basis of a certain mathematical algorism such as the Dijkstra method, requiring an enormous amount of data.

It is noted that the route searching involving a heavy processing on the basis of the route searching information including the enormous amount of data is not executed at the communication navigation terminal 5, but executed at the communication center apparatus 3 by means of the map information processing database device 74 and the microprocessor 72.

Thus, owing to the absence of the route searching information including the enormous volume of data, the CD-ROM 33, the DVD-ROM 34, the HDD 36 and the like in the communication navigation terminal 5 requires quite less storage volume than the storage volume necessary for the map information processing database device 74. Therefore, it results in the great advantage in terms of the simplification of the communication navigation terminal 5. Additionally, owing to the absence of the route searching on the basis of the route searching information, the communication navigation terminal 5 involves no heavy processing in the system controller 20. Therefore, it also results in the great advantage in terms of the simplification of the communication navigation terminal 5. Particularly, the route information as the result of the route searching is transmitted via the radio wave, instead of the radio transmission of the route searching information or the like including the enormous volume of data. Therefore, it results in great advantage in terms of the reduction in the data volume to be transmitted/received and the lightening of the transmitting/receiving capability in the communication navigation terminal 5 and the communication center apparatus 3.

The data processing in the Example set forth above or other Examples set forth below is mainly executed by the CPU 22 in the communication navigation terminal 5 particularly shown in FIG. 4 as well as the microprocessor 72 and the map information processing database device 74 in the communication center apparatus 3 shown in FIG. 5. More concretely, in addition to the computer program for controlling the fundamental processing such as map displaying or current position displaying in the navigation system, a computer program relating to the transmission control for the route searching request to the communication center apparatus 3, and/or relating to the display control for the optimal route on the basis of the route information received from the communication center apparatus 3 are executed by the CPU 22 in the communication navigation terminal 5 shown in FIG. 4. On the other hand, a computer program relating to the receiving control for the route searching request, and/or relating to the control for the optimal route searching are executed by the microprocessor 72 and/or the map information processing database device 74 in the communication center apparatus 3 shown in FIG. 5. Moreover, the computer program to be executed by the CPU may be stored in an internal storage unit such as the RAM 24 in the system controller 20 shown in FIG. 4. Alternatively, it may be downloaded via the radio communication device 38. On the other hand, the computer program to be executed by the microprocessor 72 and the map information processing database device 74 may be stored in the storage unit 76, the DVD-ROM 78 or the like shown in FIG. 5, alternatively may be downloaded via the line connecting device 71, the communication terminal 79 or the like.

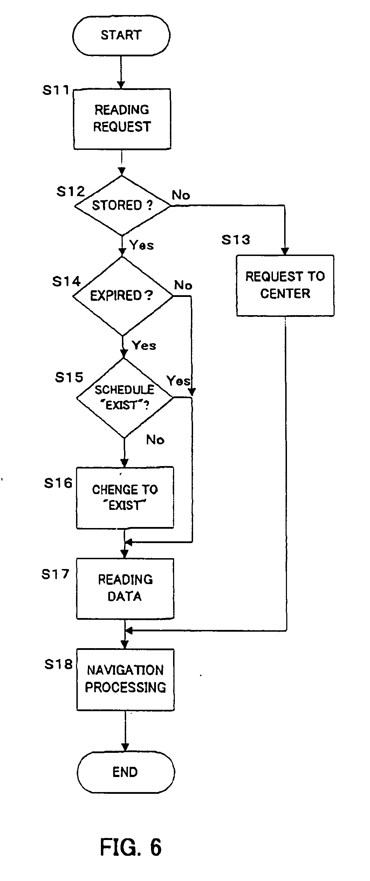

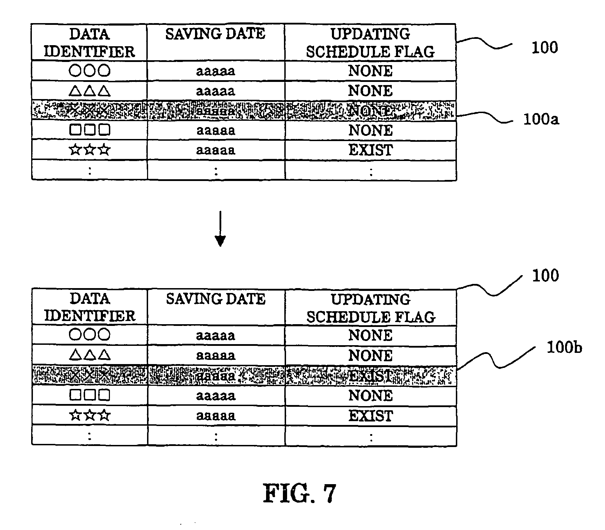

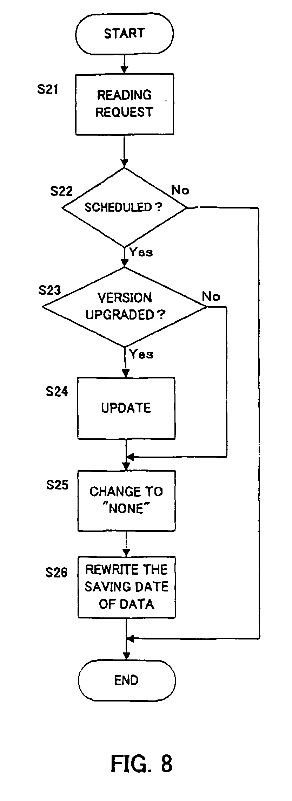

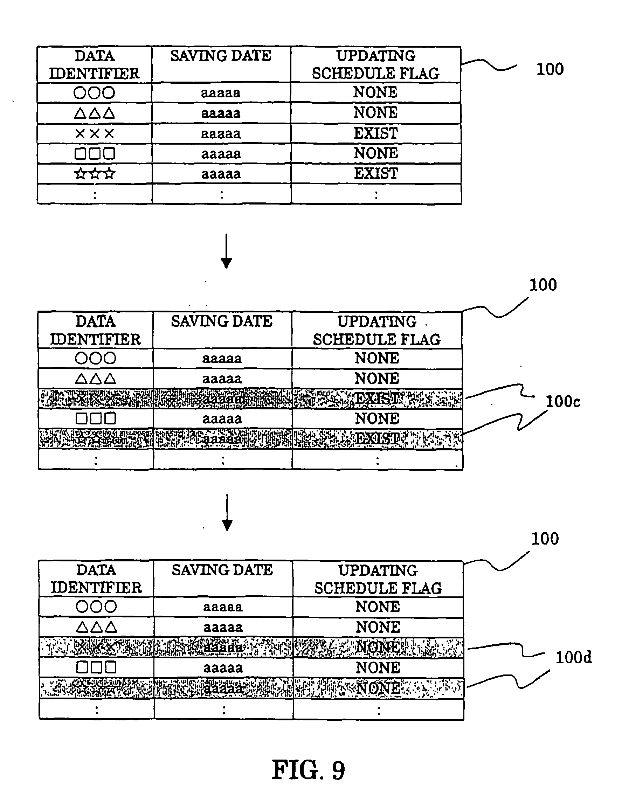

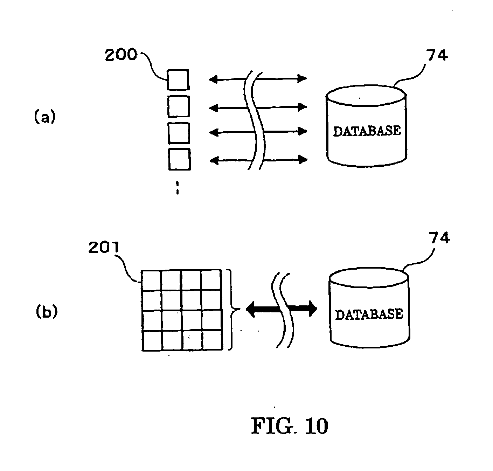

Heretofore the construction of the communication navigation system according to the Example has been discussed, and then the operation thereof will be discussed, with referring to FIG. 6 to FIG. 10. FIG. 6 is a flow chart illustrating the process flow in the case that the map data is scheduled to be updated in the communication terminal 5 according to the Example, FIG. 7 is a conceptual diagram illustrating the change in the contents of the updating schedule table, during the use of the data. FIG. 8 is a flow chart illustrating the process flow in the case that the data is actually updated in the communication navigation terminal 5, FIG. 9 is a conceptual diagram illustrating the change in the contents of the updating schedule table used in the Example, during the updating of the data. FIG. 10 is a conceptual diagram concretely illustrating an exemplary data unit to be updated in the Example.

As shown in FIG. 6, for a performance of a certain navigation processing such as the route guidance from the current point to a desired destination in the communication navigation terminal 5, reading the map data relating to the area necessary for the processing is firstly required (step S11). Therewith, it is judged whether or not the map data is stored in the HDD 36 (step S12).

If it is judged that the data is not stored therein (step 512: NO), the acquisition request for the map data is transmitted from the communication terminal 5 to the communication center apparatus 3 via the digital communication network 1 (step S13).

On the other hand, if it is judged that the data is stored therein (step S12: YES), it is judged whether or not the map data requested to be read has expired over the predetermined period from the saving date (step S14).

Particularly in the present Example, the updating schedule table 100 exemplified respectively in the upper portion and the lower portion in FIG. 7 is constructed within the RAM 24 in the communication navigation terminal 5 or within the non-volatile memory or the like which is additionally integrated within the system controller 20. In the updating schedule table 100 in FIG. 7, a "data identifier" is a code to distinguish each data, such as a file name or a mesh code.

In the step S14, the judgment is performed by referring to the updating schedule table, as for the saving date "aaaaa" of each map data without actually reading each map data from the HDD 36.

As shown in FIG. 7, in the updating schedule table 100, the "data identifier" is assigned to each datablock of the map data, which is divided into an appropriate data size for updating the map data, and the "saving date" and an "updating schedule flag" are listed for each identifier. The "saving date" herein may be of indicating the saving time and date when the map data is saved in response to the updating request as discussed above. Alternatively, it may be the updating time and date when the updating request is transmitted regardless whether the updating is actually done. Furthermore, it may be the acquisition time and date when the map data is acquired in the step S13, or may be the acquisition requesting time and date when the acquisition request for the map data is transmitted. Finally, the form of the saving date may be "date, month and year" with or without "time". Alternatively, it may be indicated by any desired time unit, such as weeks only, months only or years only.

The "predetermined period" as the basis of the judgment in the step S14 is preferably but not exclusively set at two days, three days, seven days, thirty days and so on, so that data is updated effectively and timely, corresponding to the frequency of the version-upgrade operation at the map information processing database device 74 in the communication center apparatus 3. For instance, if the version-upgrade is executed at an interval of one week, the frequency of updating is set at relatively short period such as two days or so, On the contrary, if the version-upgrade is executed at an interval of one month or two months, the frequency of updating is set at relatively long period such as seven days (i.e. a week), ten days, twenty days or so.

The judgment in the step S14 is based on the comparison of "the value obtained by subtracting the saving date from the present date" with "the predetermined period (the number of days)".

In the step S14, if it is judged that the data has expired over the predetermined period (step S14: YES), the judgment is then made whether or not the map data is scheduled to be updated, referring to "the updating schedule flag" (step S15). Concretely, the updating schedule flag, which is set to "exist" in the updating schedule table, means that the updating is scheduled, i.e. the map data is scheduled to be updated. On the other hand, the updating schedule flag, which is set to "none" in the updating schedule table, means that the updating is not scheduled, i.e. the map data is not scheduled to be updated.

If the updating is not scheduled (step S15: NO), the status of the updating schedule flag in the updating schedule table is changed. That is, as shown in FIG. 7, the status of the updating schedule flag associated with the map data is changed from a status "none" 100a to a status "exist" 100b (step S16).

Thereafter, the map data that is requested to be read is read from the HDD 36 (step S17).

On the other hand, in the step 514, if it is judged that the data has never expired over the predetermined period from the saving date (step S14: NO), the process advances to the step S17 to read the map data requested to be read from the HDD 36 or the like, without checking or rewriting of the updating schedule flag (step S17).

In the step S15, if it is judged that the updating is scheduled (step 515: YES), rewriting of the updating schedule flag is unnecessary and the operational flow advances to the step S17 to read the map data requested to be read from the HDD 36 or the like, without rewriting of the updating schedule flag (step S17).

Thereafter, the navigation processing desired at the step S11 is executed by using the map data transmitted from the communication center apparatus 3 in response to the acquisition request of the step S13, or by using the map data read from the HDD36 or the like at the step S17 (step S18) and a series of process is terminated.

Thus, the updating schedule table as shown in FIG. 7 is constructed, wherein the map data actually used to execute the navigation processing is scheduled to be updated.

Thereafter, in the present Example, such map data scheduled to be updated in the updating schedule table are updated collectively at the trigger event.

More specifically, referring to FIG. 8, at the predetermined trigger event such as the main power turning on operation in the communication terminal 5, the updating request for the map data is transmitted (step S21).

Then, for each of the map data, which is divided into multiple data blocks of the predetermined size as the updating unit in the updating schedule table as shown in FIG. 7, it is judged whether or not it is scheduled to be updated (step S22).

For instance, once the updating schedule table 100 as shown in the upper section of FIG. 9 is referred to, the map data indicated with the updating schedule flag in the state "exist" 100c as shown in the middle stage of FIG. 9 is extracted as the map datablock scheduled to be updated.

If it is judged that there is no map data schedule to be updated in the step S22 (step S22: NO), the updating is not required and a series of processing is terminated. Thus, the wasteful occasion of communication can be reduced.

On the other hand, if it is judged that there is at least a bit of map data scheduled to be updated in the step S22 (step S22: YES), the updating request for transmitting the map data schedule to be updated is transmitted to the communication center apparatus 3, and then, in the map information processing database device 74, it is judged whether or not the map data schedule to be updated is updated to the latest version (step S23). That is, the version check is executed.

If it is judged that the map data schedule to be updated is updated to the latest version (step S23: YES), it is meaningful to update the map data, and thereby the map data is actually updated (step S24). Concretely, the latest version of the map data extracted from the map information processing database device 74 is transmitted from the communication center apparatus 3 to the communication navigation terminal 5 via the digital fixed communication network 1 and the map data stored in the HDD 36 or the like is updated.

After the completion of this updating operation or in the case that the version-upgrade is not executed and the updating of the map data is not meaningful on the basis of the result of the judgment in the step S23, then the updating schedule flag in the updating schedule table for the map data just updated or the map data needless to be updated, as shown in the lower section of FIG. 9, is changed from the state "exist" 100c to the state "none" 100d (step S25). That is, immediately after the updating operation is executed collectively, all of the updating schedule flags in the updating schedule table 100 are reset to the state "none".

Further, after the saving date of the map data relating to the updating operation in the updating schedule table 100 is rewritten to the present time and date (step S26), a series of processing is terminated.

Now as shown in FIG. 10 (a), in the Example, the updating request to the map information processing database device 74 is preferably transmitted not data by data but in a unit of map data blocks 200, collectively for a plurality of map data blocks 200 at one updating request. Alternatively, as shown in FIG. 10 (b), the updating request is possible for a map data block group 201, which is larger than an individual data block and includes a plurality of such map data blocks 200. For instance, if the map data block 200 is an individual file or a mesh data identifiable from the updating schedule table 100 (refer to FIG. 7 and FIG. 9), the map data block group 201 is of the larger size group including a plurality of files or mesh data. For instance, if the map data block 200 is the map data classified by municipalities, the map data block group 201 is the map data classified by prefectures. Alternatively, if the map data block 200 is the map data in a narrow sense consisting of the road map or the like, the map data block group 201 is the map data in a broad sense including an additional information such as facility information in addition to the road map. In any case, by setting the unit for the updating request or the version-upgrade as the map data block 200 or the map data block group 201, the frequency of the updating can be reduced as well as the total volume of data to be transmitted if the updating is required.

Alternatively, in the present Example, it is possible that the unit of the map data for the updating request from the communication navigation terminal 5 is set as a single data, while the unit of the corresponding map data transmitted from the communication center apparatus 3 is set as the map data block 200 or the map data block group 201. Alternatively, it is possible that the unit of the map data for the updating request from the communication navigation terminal 5 is set as the data block 200, while the unit of the corresponding map data transmitted from the communication center apparatus 3 is set as the map data block group 201. Further, the unit for the version-upgrade in the map information processing database device 74 may be set as the map data block 200 or the map data block group 201.

As discussed above, in the present Example, the wasteful occasion of communication for downloading various data to be updated can be reduced. Further, the communication cost can also be reduced by totally reducing the frequency of the communication, the period of the communication, the data amount of the communication and the like.

The communication navigation terminal according to the present invention is applicable to various carriers such as airplanes, shipping, motorcycles and further to various kinds of communication navigation terminals for person or animal with PDAs or mobile phones, besides the communication navigation terminal for on-vehicle use as discussed in the above Examples. Further, it is applicable to various kinds of communication systems for downloading various data to be updated to the latest version, instead of the communication navigation system.

## Claims

1. A communication system **characterized in that** said communication system comprises a communication center apparatus (3x) and a communication terminal apparatus (5x, 5y) both for bidirectionaly transmitting/receiving information via a communication network (1x), said communication center apparatus comprising:
a database (302) for storing data, the data being used for a certain kind of application processing and being at least partially updated regularly or irregularly; and
a center side controlling device (301) for transmitting data, which is identified as an object of updating by an updating request, among the stored data via said communication network in response to the updating request,
said communication terminal apparatus comprising:
a saving device (503) for saving the data, which is transmitted from said center side controlling device, and saving time and date information, which indicates a saving time and date when the data is saved, in correlation with the saved data therein;
a processing device (502) for executing the application processing, on the basis of the data saved in said saving device; and
a terminal side controlling device (501x, 501y) for (i) judging, on the basis of the time and date information, whether or not at least a part of the data saved in said saving device has expired over a predetermined period starting from the saving time and date, (ii) transmitting the updating request, which identifies the data judged as expired over the predetermined period as the object of updating and instructs to transmit the identified data, to said center side controlling device via said communication network, and (iii) updating the data saved in said saving device by means of the data transmitted from said center side controlling device in response to the updating request.

2. The communication system according to claim 1, **characterized in that** said terminal side controlling device (501x, 501y) judges whether or not the data to be used by said processing device (502) among the data saved in said saving device (503) has expired over the predetermined period starting from the saving time and date.

3. The communication system according to claim 1 or 2, **characterized in that** the time and date information indicates updating request time and date when the updating request is transmitted from said terminal side controlling device (501x, 501y), instead of indicating the saving time and date, and said terminal side controlling device identifies the data already expired over the predetermined period starting from the updating request time and date, instead of the saving time and date, as the object of updating.

4. The communication system according to any one of claims 1 to 3,
**characterized in that** said terminal side controlling device (501x, 501y) judges whether or not the saved data to be used by said processing device (502) has expired over the predetermined period starting from the saving time and date, upon utilization of the saved data by said processing device, and identifies the saved data to be used by said processing device as the object of updating, if the saved data is as expired over the predetermined period.

5. The communication system according to any one of claims 1 to 4,
**characterized in that** said terminal side controlling device (501x, 501y) judges whether or not the data necessary for executing the application processing is saved in said saving device (503), and transmitting an acquisition request, which instructs to transmit the data judged as not saved in said saving device, to said center side controlling device (301) via said communication network (1x), said processing device (502) executes the application processing by means of the data transmitted from said center side controlling device in response to the acquisition request, and said saving device further saves the data, which is transmitted in response to the acquisition request, and saves the time and date information which indicates the saving time and date when the data is saved, in correlation with the saved data therein.

6. A communication system **characterized in that** said communication system comprises a communication center apparatus (3x) and a communication terminal apparatus (5x, 5y) both for bidirectionaly transmitting/receiving information via a communication network (1x), said communication center apparatus comprising:
a database (302) for storing data, the data being used for a certain kind of application processing and to be at least partially updated regularly or irregularly; and
a center side controlling device (301) for transmitting data, which is identified as an object of updating by an updating request, among the stored data via said communication network in response to the updating request,
said communication terminal apparatus comprising:
a saving device (503) for saving the data, which is transmitted from said center side controlling device, and saving time and date information, which indicates a saving time and date when the data is saved, in correlation with the saved data therein;
a processing device (502) for executing the application processing, on the basis of the data saved in said saving device; and
a terminal side controlling device (501x, 501y) including (i) a first judgment device for judging whether or not data requested to be read is saved in said saving device, upon a reading request from said processing device to said saving device for reading the data necessary for executing the application processing, (ii) a second judgment device for judging whether or not the data requested to be read has expired over a predetermined period starting from the updating request time and date, in comparison with the time and date information relating to the data requested to be read, if said second judgment device judges that the data is saved, and (iii) an updating controlling device for transmitting the updating request, which identifies the data requested to be read as the object of updating and instructs to transmit the identified data, to said center side controlling device via said communication network, if said second judgment device judges that the data has expired over the predetermined period; and updating the data saved in said saving device by means of the data transmitted from said center side controlling device in response to the updating request,
wherein if said first judgment device judges that the data is not saved,
(a) said updating controlling device transmits an acquisition request, which instructs to transmit the data judged as not saved in said saving device, to said center side controlling device via said communication network, (b) said processing device executes the application processing by means of the data transmitted from said center side controlling device in response to the acquisition request, and (c) said saving device saves the data, which is transmitted in response to the acquisition request, and saves time and date information, which indicates an acquisition time and date when the acquisition request is transmitted, in correlation with the saved data therein.

7. The communication system according to any one of claims 1 to 6,
**characterized in that** the data includes version information indicating a version thereof, and said center side controlling device (301) judges whether or not the data relating to the updating request is the latest version in said database (302), on the basis of the version information of the data relating to the updating request, and transmits the data in response to the updating request if the data is not the latest version, or transmits information indicating unnecessity of updating in response to the updating request if the data is the latest version.

8. The communication system according to claim 7, **characterized in that** said center side controlling device (301) judges whether or not the data relating to the updating request is the latest version by unit of a data block in a predetermined range including the data relating to the updating request.

9. The communication system according to any one of claims 1 to 8, **characterized in that** said terminal side controlling device (501x, 501y) saves updating schedule information for identifying the data as the object of updating in correlation with the data as the object of updating, and thereafter at a predetermined timing, executes the updating request on the basis of the updating schedule information.

10. The communication system according to claim 9, **characterized in that** said terminal side controlling device (501x, 501y) judges whether or not the data judged as expired over the predetermined period is identified as the object of updating, on the basis of the updating schedule information, and updates the updating schedule information so as to identify the data if the data is not identified.

11. The communication system according to claim 9 or 10, **characterized in that** the updating schedule information includes an updating schedule flag provided for each of the data.

12. The communication system according to any one of claims 1 to 8,
**characterized in that** said terminal side controlling device (501x, 501y) saves the data, which is identified as the object of updating, as the data scheduled to be updated in said saving device (503) separately from the data, which is not identified as the object of updating, and thereafter at a predetermined timing, executes the updating request on the basis of the updating schedule data,

13. The communication system according to any one of claims 1 to 12,
**characterized in that** said terminal side controlling device (501x, 501y) transmits the updating request collectively for a plurality of data as the object of updating saved in said saving device (503).

14. The communication system according to any one of claims 1 to 13, **characterized in that** the predetermined period is set on the basis of a cycle of a version-upgrade in said database (302).

15. The communication system according to any one of claims 1 to 14, **characterized in that** said center side controlling device (301) transmits, in response to the updating request, a data block in a predetermined unit, which includes the data as the object of updating.

16. The communication system according to any one of claims 1 to 14,
**characterized in that** said terminal side controlling device (501x, 501y) requests, in the updating request, a data block in a predetermined unit, which includes the data as the object of updating.

17. A communication system **characterized in that** said communication system comprises a communication center apparatus (3x) and a communication terminal apparatus (5x, 5y) both for bidirectionaly transmitting/receiving information via a communication network (1x), said communication center apparatus comprising:
a database (302) for storing data, the data being used for a certain kind of application processing and to be at least partially updated regularly or irregularly; and
a center side controlling device (301) for transmitting data, which is identified as an object of updating by an updating request, among the stored data via said communication network in response to the updating request,
said communication terminal apparatus comprising:
a saving device (503) for saving the data transmitted from said center side controlling device (301);
a processing device (502) for executing the application processing, on the basis of the data saved in said saving device ; and
a terminal side controlling device (501x, 501y) for (i) transmitting the updating request, which identifies the data to be used by said processing device as the object of updating and instructs to transmit the identified data, to said center side controlling device via said communication network and (ii) updating the data saved in said saving device by means of the data transmitted from said center side controlling device in response to said updating request, wherein
the data includes version information indicating a version thereof, and
said center side controlling device judges whether or not a data block in a predetermined unit including the data as the object of updating is in the latest version in said database with referring to the version information, and transmits the data block in response to the updating request if the data block is not in the latest version, or transmits information indicating the unnecessity of updating in response to the updating request if the data block is in the latest version.

18. The communication system according to any one of claims 1 to 17,
**characterized in that** the application processing is a navigation processing of navigating a movable body, said communication terminal apparatus (5x, 5y) is a communication navigation terminal to be mounted on the movable body, and said communication system is constructed as a communication navigation system.

19. A computer program **characterized in that** said computer program is for tangibly embodying a program of instructions executable by a computer to make the computer function as the communication system according to any one of claims 1 to 18.

20. A communication terminal apparatus (5x, 5y) **characterized in that** said communication terminal apparatus is for bidirectionaly transmitting/receiving information to/from a communication center apparatus (3x) via a communication network (1x), said communication center apparatus comprising: a database (302) for storing data, the data being used for a certain kind of application processing and to be at least partially updated regularly or irregularly; and a center side controlling device (301) for transmitting data, which is identified as an object of updating by an updating request, among the stored data via said communication network in response to the updating request, said communication terminal apparatus comprising:
a saving device (503) for saving the data, which is transmitted from said center side controlling device, and saving time and date information, which indicates a saving time and date when the data is saved, in correlation with the saved data therein;
a processing device (502) for executing the application processing, on the basis of the data saved in said saving device; and
a terminal side controlling device (501x, 501y) for (i) judging, on the basis of the time and date information, whether or not at least a part of the data saved in said saving device has expired over a predetermined period starting from the saving time and date, (ii) transmitting the updating request, which identifies the data judged as expired over the predetermined period as the object of updating and instructs to transmit the identified data, to said center side controlling device via said communication network, and (iii) updating the data saved in said saving device by means of the data transmitted from said center side controlling device in response to the updating request.

21. A communication terminal apparatus (5x, 5y) **characterized in that** said communication terminal apparatus is for bidirectionaly transmitting/receiving information to/from a communication center apparatus (3x) via a communication network, said communication center apparatus comprising:
a database (302) for storing data, the data being used for a certain kind of application processing and to be at least partially updated at least partially and regularly or irregularly; and
a center side controlling device (301) for transmitting data, which is identified as an object of updating by an updating request, among the stored data via said communication network in response to the updating request, and
said communication terminal apparatus comprising:
a saving device (503) for saving the data, which is transmitted from said center side controlling device, and saving time and date information, which indicates a saving time and date when the data is saved, in correlation with the saved data therein;
a processing device (502) for executing the application processing, on the basis of the data saved in said saving device ; and
a terminal side controlling device (501x, 501y) including (i) a first judgment device for judging whether or not data requested to be read is saved in said saving device, upon a reading request from said processing device to said saving device for reading the data necessary for executing the application processing, (ii) a second judgment device for judging whether or not the data requested to be read has expired over a predetermined period starting from the updating request time and date, in comparison with the time and date information relating to the data requested to be read, if said first judgment device judges that the data is saved, and (iii) an updating controlling device for transmitting the updating request, which identifies the data requested to be read as the object of updating and instructs to transmit the identified data, to said center side controlling device via said communication network, if said second judgment device judges that the data has expired over the predetermined period; and updating the data to be saved in said saving device by means of the data transmitted from said center side controlling device in response to the updating request,
wherein if said first judgment device judges that the data is not saved,
(a) said updating controlling device transmits an acquisition request, which instructs to transmit the data judged as not saved in said saving device, to said center side controlling device via said communication network, (b) said processing device executes the application processing by means of the data transmitted from said center side controlling device in response to the acquisition request, and (c) said saving device saves the data, which is transmitted in response to the acquisition request, and saves time and date information, which indicates an acquisition time and date when the acquisition request is transmitted, in correlation with the saved data therein.

22. A computer program **characterized in that** said computer program is for tangibly embodying a program of instructions executable by a computer to make the computer function as the communication terminal apparatus according to claim 20 or 21.

23. A communication center apparatus (3x) **characterized in that** said communication center apparatus is for bidirectionaly transmitting/receiving information to/from a communication terminal apparatus (5x, 5y) via a communication network, said communication terminal apparatus comprising:
a saving device (503) for saving the data transmitted from said center side controlling device (301);
a processing device (502) for executing an certain kind of application processing, on the basis of the data saved in said saving device; and
a terminal side controlling device (501x, 501y) for (i) transmitting an updating request, which identifies the data to be used by said processing device as an object of updating and instructs to transmit the identified data, to said center side controlling device via said communication network; and (ii) updating the data saved in said saving device by means of the data transmitted from said center side controlling device in response to the updating request,
said communication center apparatus comprising:
a database (302) for storing data, the data being used for the application processing and to be at least partially updated regularly or irregularly; and
a center side controlling device (301) for transmitting the data, which is identified as the object of updating by an updating request, among the stored data via said communication network in response to the updating request,
wherein the data includes version information indicating a version thereof, and said center side controlling device judges whether or not a data block in a predetermined unit including the data as the object of updating is in the latest version in said database with referring to the version information, and transmits the data block in response to the updating request, if the data block is not in the latest version, or transmits information indicating the unnecessity of updating in response to the updating request, if the data block is in the latest version.

24. A computer program **characterized in that** said computer program is for tangibly embodying a program of instructions executable by a computer to make the computer function as the communication center apparatus according to claim 23.

25. A communication method **characterized in that** said communication method is executed by a communication system comprising a communication center apparatus (3x) and a communication terminal apparatus (5x, 5y) both for bidirectionaly transmitting/receiving information via a communication network, comprising:
at said communication center apparatus,
a storing process of storing data, the data being used for a certain kind of application processing and being at least partially updated regularly or irregularly; and
a center side controlling process of transmitting data, which is identified as an object of updating by an updating request, among the stored data via said communication network in response to the updating request,
at said communication terminal apparatus,
a saving process of saving the data, which is transmitted from said center side controlling, and saving time and date information, which indicates a saving time and date when the data is saved, in correlation with the saved data therein;
an executing process of executing the application processing, on the basis of the data saved in said saving device (503); and
a terminal side controlling process of (i) judging, on the basis of the time and date information, whether or not at least a part of the data saved in said saving device has expired over a predetermined period starting from the saving time and date, (ii) transmitting the updating request, which identifies the data judged as expired over the predetermined period as the object of updating and instructs the identified data. to said center side controlling device (301) via said communication network, and (iii) updating the data in said saving device by means of the data transmitted from said center side controlling device in response to the updating request.
